# EUROPEAN PATENT APPLICATION

(11) **EP 2 030 951 A1**
(43) Date of publication of application: **04.03.2009**
(21) Application number: 07018618.4
(22) Date of filing: 21.09.2007
(51) Int. Cl.: C02F 1/52

(54) **Portable apparatus for purifying waste water**

(30) Priority: 08.08.2007 KR 20070079341
(71) Applicant: KOREA INSTITUTE OF MACHINERY & MATERIALS, Yusung-gu Daejeon City (KR)
(72) Inventor: Park, Jong-Won, Daejeon-City (KR); Lee, Young-Ki, Daejoen-City (KR)
(74) Representative: Beier, Ralph

(57) **Abstract**

A portable apparatus for purifying waste water comprising a first filter, a tank for sterilizing the contamined water and for generating a precipitate by cohering impurities, and a second filter to extract drinking water, wherein the tank uses a pump to repeatedly circulate the contamined water through the first filter and the tank, and to agitate the water with a composite precipitator.
The tank includes a first jet pipe and a second jet pipe which form a number of spray nozzles to form a vortex in the tank.
Only a single pump is used for the inflow, sterilization, circulation, agitation and extraction of the water, thereby providing a simple structure that one tank solves a multi-step process, making it easy to move and install the apparatus.

## Description

### CROSS-REFERENCE TO RELATED APPLICATION

This application claims the benefit of Korean Patent Application No. 10-2007-0079341 , filed August 8 , 2007, the disclosure of which is hereby incorporated herein by reference in its entirety.

### BACKGROUND OF THE INVENTION

### 1. Technical Field

The present invention relates to a portable apparatus for purifying waste water to extracting drinking water by removing impurities contained in contaminated water, and more particularly, to a portable apparatus for purifying waste water, which comprises a first filter for primarily filtering impurities, a tank for sterilizing contaminated water flowing from the first filter and generating a precipitate by circulating and agitating the contaminated water and a composite precipitator, and a second filter connected to the tank, for secondarily filtering the impurities of the contaminated water, wherein the inflow of the contaminated water, the extraction of the drinking water by filtering the contaminated water and the agitation of the contaminated water and the composite precipitator are solved by using a single same pump, and the tank includes first and second jet pipes for forming a vortex to smoothly agitate the contaminated water and the composite precipitator.

### 2. Discussion of Related Art

In accordance with a conventional apparatus for purifying waste water, a coagulant is put in waste water, to coagulate impurities contained in the waste water. The coagulated impurities are precipitated in a precipitation tank through a long time. Purified water which is present above the precipitated impurities is allowed to again pass through a filter, to obtain completely purified water.

However, in the conventional apparatus for purifying waste water, a number of precipitation tanks are to be installed in large dimensions. When waste water is subject to a multi-step purification process, the volume and installation area increase so that a large space is needed. Moreover, since the waste water is to pass through a number of precipitation tanks many times, a precipitation time is very long and therefore a very long time is required for purifying the waste water

### SUMMARY OF THE INVENTION

Therefore, the present invention is directed to provide a portable apparatus for purifying waste water, which extracts purified drinking water by filtering contaminated water through a first filter using a pre filter and a second filter using a PCP filter, and which is configured to allow the contaminated water flowing out from the first filter to flow into a tank, to sterilize the contaminated water and put a composite precipitator including a plurality of elements into the tank so that impurities contained in the contaminated water are cohered to generate a precipitate, and to extract the drinking water through the second filter, in which a single same pump is used to solve the inflow of the contaminated water, the extraction of the drinking water by filtering the contaminated water and the circulation and agitation of the contaminated water and the composite precipitator, thereby simplifying a conventional process using a number of tanks, improving the effects of filtering/sterilization/agitation to purify contaminated water for drinking water, reducing the manufacturing costs according to the simplification of the constituents and the removal of the unnecessary process, and making it easy to be moved.

The other features and advantages of the present invention will be described below and become more apparent by an exemplary embodiment(s) thereof. Further, the objects and advantages of the present invention will be realized by means and combination thereof set forth in the claims.

An exemplary embodiment of the present invention provides a portable apparatus for purifying waste water, which comprises: a first filter for primarily filtering impurities contained in contaminated water flowing in by a pump; a tank connected to the first filter, for sterilizing the contaminated water by a chlorine disinfectant put inside the tank and generating a cohered precipitate by putting a composite precipitator to be mixed with the contaminated water and agitating the composite precipitator and the contaminated water; and a second filter connected to the tank, for secondarily filtering the contaminated water circulated and agitated by the pump, to extract purified drinking water.

The present invention to achieve the above object has the following characteristics:

In accordance with an exemplary embodiment, the present invention provides a number of first filters for primarily filtering foreign materials contained in contaminated water flowing in by a pump; a tank connected to the first filters, for sterilizing the contaminated water by using a chlorine disinfectant put into the tank and generating a precipitate cohered by putting a composite precipitator to be mixed with the contaminated water and agitating the composite precipitator and the contaminated water; and a number of second filters connected to the tank, for secondarily filtering the circulated and agitated contaminated water by the pump, to extract purified drinking water.

Further, the tank may be connected to the pump so as to have a repeated circulation structure of flowing the contaminated water mixed with the composite precipitator out and thereafter flowing it into the tank, wherein, during the circulation process, the composite precipitator is put in the tank for a predetermined time so that the composite precipitator and the contaminated water are circulated and agitated.

Further, the tank may be on standby until impurities are precipitated by turning off the pump for 30 minutes after operating the pump for a predetermined time.

Further, the composite precipitator may use a carbon cohesive agent and aluminum sulfate which is dissolved in distilled water, or a coagulant which combines the carbon cohesive agent and aluminum sulfate.

Further, to purify the water of 10ℓ, the portable apparatus for purifying waste water may use the chlorine disinfectant of 100mg and the composite precipitator formed of the carbon cohesive agent of 4g and the aluminum sulfate of 1.3g which is dissolved in the distilled water, or the chlorine disinfectant of 100mg and the composite precipitator formed of the coagulant of 5.3g resulted from the combination of the carbon cohesive agent and aluminum sulfate.

Further, the tank may be operatively connected to each first filter by a flow pipe, the flow pipe may be connected to a distributor to be divided into a first jet pipe and a second jet pipe in the tank, and the first jet pipe and the second jet pipe may include a number of spray nozzles which are spaced apart from one another by a predetermined distance in a length direction and which are formed to protrude from the outer surfaces of the first and second jet pipes in different orientation, to spray the contaminated water inside the tank and to occur a vortex inside the tank so that the composite precipitator and the contaminated water are agitated.

Further, the portable apparatus for purifying waste water may connect the single pump to the tank, the first filter and the second filter, wherein, upon inflow of the contaminated water, the pump is used to suck in and flow the contaminated water into the tank through the first filter; upon the mixing of the contaminated water and the composite precipitator, the pump is used to repeatedly circulate the contaminated water, which flows out from the tank, to the tank so that the composite precipitator and the contaminated water are agitated inside the tank; and upon the extraction of the drinking water, the pump is used to flow the contaminated water circulated and agitated in the tank into the second filter so that the drinking water is extracted through the second filter, thereby enabling the inflow and agitation of the contaminated water and the extraction of the drinking water by the single pump.

Further, the first filter may use a pre filter which is a chemically treated general textile fabric.

Further, the second filter may comprise a first filter housing and a second filter housing in a dual pipe shape, and a PCP filter inserted in the space formed between the first and second filter housings, wherein the PCP filter has a structure of sequentially bonding a first pre filter, an activated carbon fiber and a second pre filter, and wherein, after the contaminated water flowing from an outer surface of the first filter housing sequentially passes through the PCP filter and the second filter housing, it flows out through one side in the second filter housing.

### BRIEF DESCRIPTION OF THE DRAWINGS

The above and other features and advantages of the present invention will become more apparent to those of ordinary skill in the art by describing in detail preferred embodiments thereof with reference to the attached drawings in which:
Fig. 1 is a process block diagram of a portable apparatus for purifying waste water according to an exemplary embodiment of the present invention;
Fig. 2 is a process circuit diagram upon inflow of contaminated water in the portable apparatus for purifying waste water according to the embodiment of the present invention;
Fig. 3 is a process circuit diagram of circulation and agitation upon sterilization and precipitation in the portable apparatus for purifying waste water according to the embodiment of the present invention;
Fig. 4 is a process circuit diagram upon extraction of drinking water in the portable apparatus for purifying waste water according to the embodiment of the present invention;
Fig. 5 is a front perspective view of the portable apparatus for purifying waste water according to the embodiment of the present invention;
Fig. 6 is a rear perspective view of the portable apparatus for purifying waste water according to the embodiment of the present invention;
Fig. 7 is a partial perspective view of first and second jet pipes in the portable apparatus for purifying waste water according to the embodiment of the present invention; and
Fig. 8 is a perspective view of a structure of a second filter in the portable apparatus for purifying waste water according to the embodiment of the present invention.

### DETAILED DESCRIPTION OF THE INVENTION

The present invention will now be described more fully hereinafter with reference to the accompanying drawings, in which a preferred embodiment(s) of the invention are shown. It should be understood that terms and words used in the present specification and claims should not be interpreted as having a meaning defined in commonly used dictionaries and the terms and words should be interpreted as having a meaning that is consistent with their meaning in the context of the relevant art, without departing from the technical scope of the present invention, based on the principle that inventors can properly define concepts of the terms to describe their inventions in the best manner.

Accordingly, while an exemplary embodiment(s) of the present invention is capable of various modifications and alternative forms, an embodiment(s) of the present invention are shown by way of example in the drawings and will herein be described in detail. It should be understood, however, that there is no intent to limit an exemplary embodiment(s) of the invention to the particular forms disclosed, but on the contrary, an exemplary embodiment(s) of the invention are to cover all modifications, equivalents, and alternatives falling within the scope of the invention.

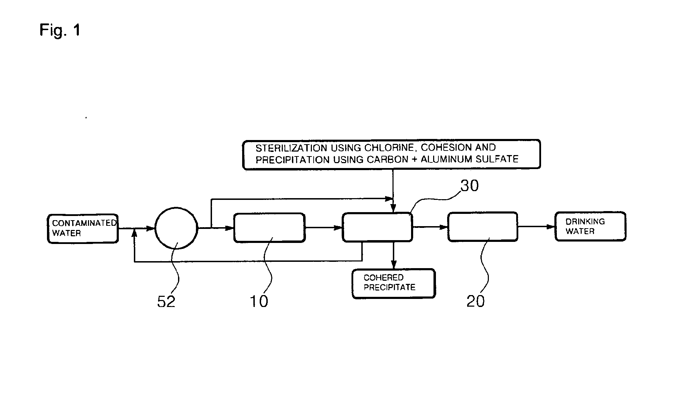

A portable apparatus for purifying waste water in accordance with a preferred exemplary embodiment of the present invention will be described with referent to Figs. 1 through 8.

As illustrated, in the portable apparatus for purifying waste water, contaminated water sucked in by a pump 52 sequentially passes through a first filter 10, a tank 30 and a second filter 20 for filtering foreign materials contained in the contaminated water. In the tank 30, the contaminated water is sterilized and a composite precipitator is used to generate an impurity precipitate so that the contaminated water is purified. The pump 52 is used to repeatedly circulate the contaminated water through the first filter 10 and the tank 30 so that the composite precipitator and the contaminated water are agitated. The portable apparatus for purifying waste water comprises the first filter 10, the tank 30, the second filter 20, the pump 52, the composite precipitator, a flow pipe, first jet pipes 50 and 50', second jet pipes 51 and 51', and spray nozzles 53.

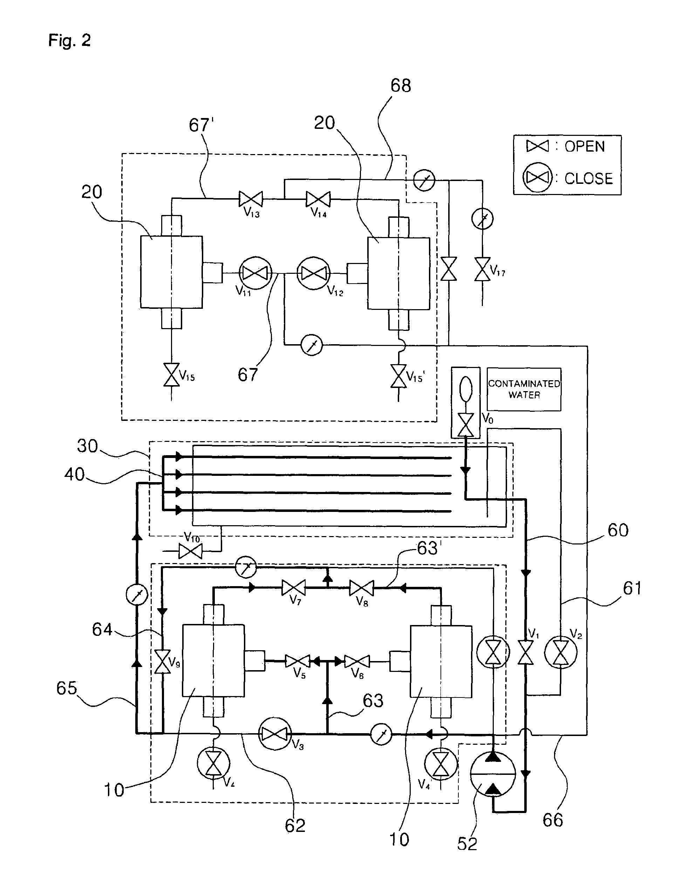

Fig. 1 is a process block diagram of the portable apparatus for purifying waste water according to the embodiment of the present invention. As illustrated in Figs. 1 and 2, when the contaminated water is first allowed to flow in by opening a valve V°, the contaminated water flows through a flow pipe 60 and flows in by the pump 52 connected to the flow pipe 60, to move to a flow pipe 62. The moving contaminated water is stopped by a valve V³ positioned in the flow pipe 62 and moves to a flow pipe 63. Subsequently, the contaminated water flows a number of the first filters 10 through open valves V5 and V6 connected to the flow pipe 63 so that the foreign materials contained in the contaminated water are primarily filtered. A pre filter produced by applying a chemical treatment to a general textile fabric is used as the first filter 10.

The filtered contaminated water is stored in the tank 30 through flow pipes 63' and 65 connected to the first filter 10 through valves V7 and V8 of the first filter 10. After the contaminated water is on standby for 30 minutes from the time when a chlorine disinfectant is put in the tank 30 where the contaminated water is stored, it is sterilized.

The contaminated water of the tank 30 flows out through a flow pipe 61 and subsequently is allowed to flow along a flow pipe 62 by driving the pump 52 connected to the flow pipe 61 so that the contaminated water again flows into the tank 30, to repeat a circulation process.

The process of repeating circulation is to agitate the contaminated water stored and sterilized in the tank 30 with the composite precipitator. The composite precipitator is put into the tank 30 after the chlorine disinfectant is put therein. In the embodiment of the present invention, a carbon cohesive agent and aluminum sulfate dissolved in distilled water is used as the composite precipitator.

Further, the composite precipitator may use a coagulant combining the carbon cohesive agent and aluminum sulfate.

After the composite precipitator is put into the tank 30, the pump 52 is driven to actively circulate and agitate the contaminated water and the composite precipitator in the tank 30.

After the contaminated water and the composite precipitator are circulated and agitated by the pump 52, the pump 52 stops operation and is on standby for 30 minutes until the foreign materials contained in the contaminated water are cohered and precipitated.

When the aforementioned process ends, the contaminated water is allowed to pass through the second filter 20 by flow pipes 61 and 66 so that the contaminated water is secondarily filtered to extract drinkable drinking water through a flow pipe 68. The second filter 20 uses a PCP filter which is formed by sequentially bonding a pre filter 13a, an activated carbon fiber 13b and a pre filter 13c in one body and which is inserted inside a filter housing having a dual pipe shape.

Further, a number of valves are formed in the flow pipes for interconnecting the pump 52, the first filter 10, the tank 30 and the second filter 20, to control the direction of allowing the contaminated water to flow in or out.

Fig. 2 is a process circuit diagram upon the inflow of the contaminated water in the portable apparatus for purifying waste water in accordance with the embodiment of the present invention. The sequence in which the contaminated water flows in is illustrated. After the contaminated water flows in through the flow pipe 60 by operating the pump 52, the contaminated water passes through a plurality of first filters 10 through the flow pipes 62 and 63 connected to the pump 52.

Thereby, the foreign materials contained in the contaminated water are primarily filtered, and the filtered contaminated water sequentially moves to the flow pipes 63', 64 and 65 connected to the first filters 10, to flow into and to be stored in the tank 30.

Fig. 2 indicates a movement path of the contaminated water upon the inflow thereof. As illustrated in Fig. 2, a number of valves V5, V6, V7, V8 and V9 are to be opened from the time when the contaminated water flows in to the time when it reaches the tank 30 by the pump 52 and the first filters 10 while the other valves are to be closed.

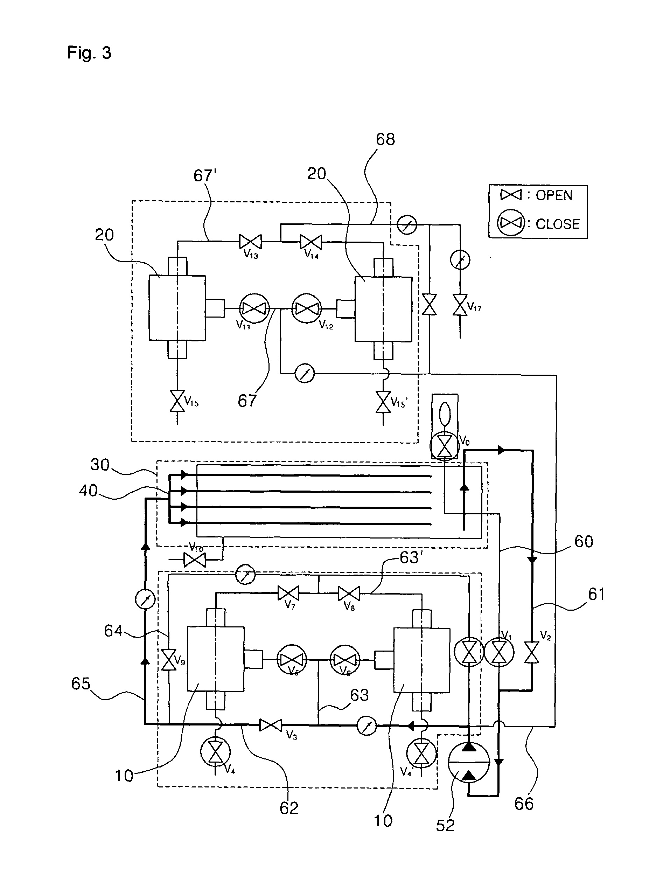

Fig. 3 is a process circuit diagram of the circulation and agitation upon the sterilization and precipitation in the portable apparatus for purifying waste water in accordance with the embodiment of the present invention. Fig. 3 shows a path of the contaminated water to be circulated and agitated when it is sterilized and precipitated in the tank 30.

The contaminated water sterilized in the tank 30 flows out from the tank 30 to the flow pipe 61 which connects the tank 30 and the pump 52. Upon the outflow of the contaminated water, the valve V2 positioned in the flow pipe 61 is to be opened and the valve V¹ positioned in the flow pipe 60 used to allow the contaminated water to first flow in, as illustrated in Fig. 2, is to be closed. That is, the flow pipe 61, which allows the contaminated water flowing out from the tank 30 to flow, is connected to the pump 52, and the contaminated water sequentially moves through a number of the flow pipes 62 and 65 by the driving of the pump 52, to again flow into the tank 30.

The aforementioned circulation repeatedly occurs by using the pump 52. Whenever the flow of the contaminated water circulates, the agitation of the contaminated water and the composite precipitator put into the tank 30 is activated, to improve the effect of generating the cohered precipitate.

Further, as illustrated in Fig. 3, when the contaminated water is circulated and agitated with the composite precipitator and repeatedly flows in and out the tank 30, it does not pass through the first filters 10, unlike the first inflow of the contaminated water as illustrated in Fig. 2.

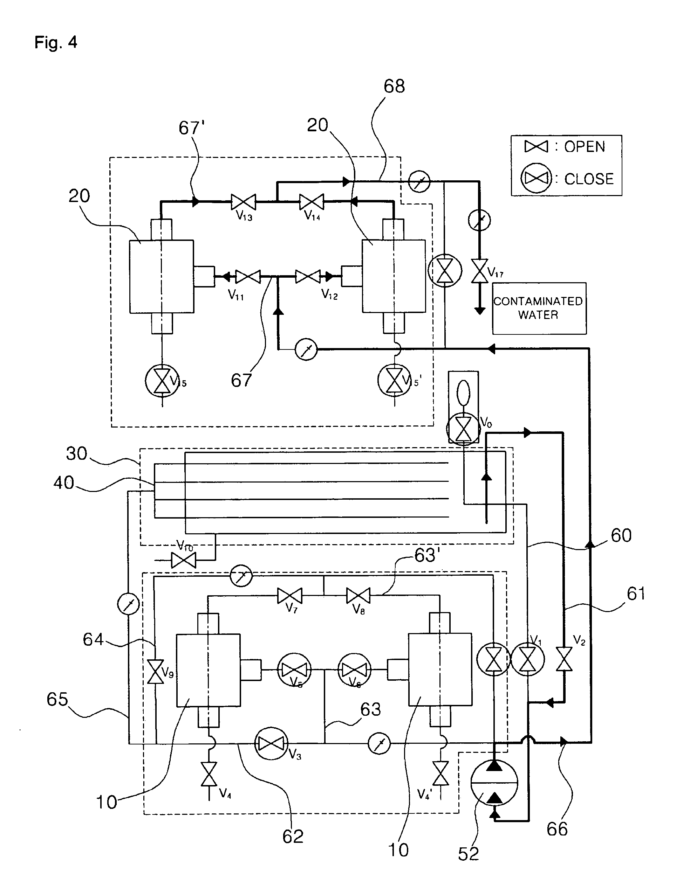

Fig. 4 is a process circuit diagram upon the extraction of the drinking water in the portable apparatus for purifying waste water in accordance with the embodiment of the present invention. There is indicated the sequence of extracting the drinking water from the contaminated water which is sterilized and has the precipitated foreign maters.

After the processes of Figs. 2 and 3, the driving of the pump 52 stops to be on standby for 30 minutes until a cohesive mass of the foreign materials is precipitated.

After the precipitation, in the same manner as Figs. 2 and 3, using the flow pipe 61 which is used to circulate and agitate the contaminated water and the composite precipitator in Fig. 2, the pump 52 connected to the flow pipe 61 is driven to suck in the contaminated water being present in the tank 30. Subsequently, the contaminated water passes through the second filters 20, through the flow pipe 66 connected to the pump 52 and the second filters 20.

The second filters 20 secondarily filter the foreign materials, to extract drinkable water.

To describe the flow path in more detail, after moving through the flow pipe 66 connected to the pump 52, the contaminated water passes through a number of the second filters 20 by a plurality of valves V¹¹ and V¹² positioned in a flow pipe 67. The contaminated water passing through the second filters 20 moves to the flow pipe 68 by valves V¹³ and V14 of a flow pipe 67' connected to the second filters 20, to extract the drinking water.

Further, the pump 52 is used for all of the inflow of the contaminated water, the agitation of the contaminated water and the composite precipitator, and the extraction of the purified drinking water as illustrated in Figs. 2, 3 and 4.

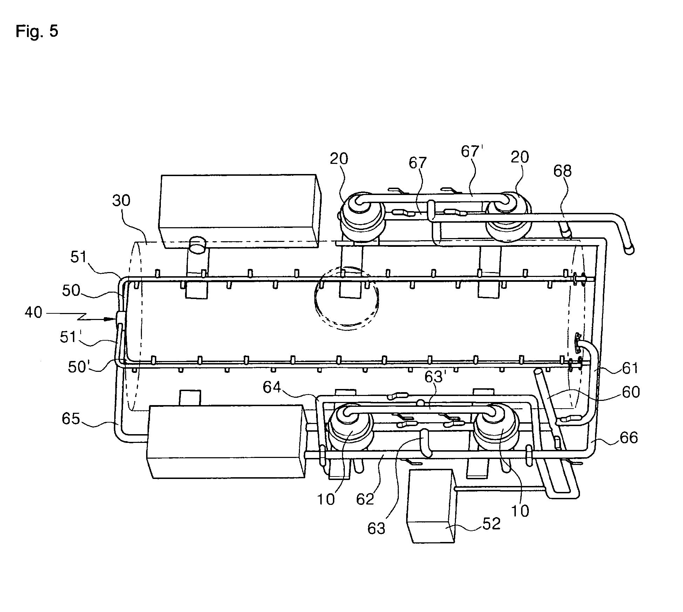

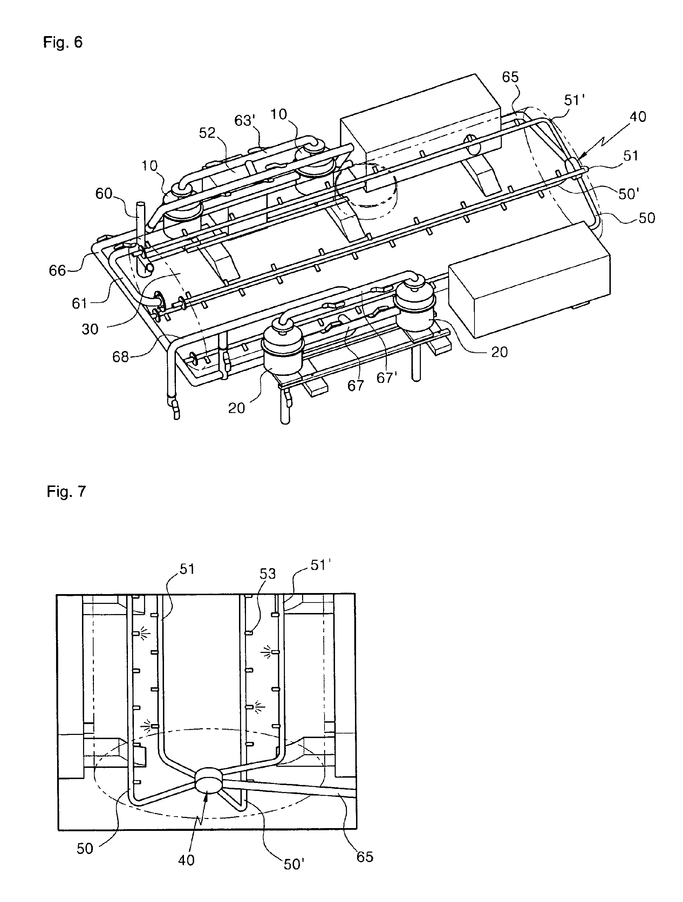

Fig. 5 is a front perspective view of the portable apparatus for purifying waste water according to the embodiment of the present invention and Fig. 6 is a rear perspective view thereof. Figs. 5 and 6 are perspective views of modeling the process circuits illustrated in Figs. 2, 3 and 4, according to the embodiment of the present invention.

Fig. 7 is a partial perspective view of the first and second jet pipes in the portable apparatus for purifying waste water according to the embodiment of the present invention. As illustrated, the flow pipe 65 to which the contaminated water moves to flow into the tank 30 is connected to a distributor 40 through the inside of the tank 30.

The distributor 40 is divided into a number of jet pipes in the direction of the length of the tank 30 and is positioned through and inside the tank 30.

The distributor 40 comprises a pair of the first jet pipes 50 and 50' and a pair of the second jet pies 51 and 51'. The spray nozzles 53 are formed to protrude from the outer surfaces of the first jet pipes 50 and 50' and the second jet pipes 51 and 51'. The spray nozzles 53 are spaced apart from one another by a predetermined distance in the direction of the length of the first and second jet pipes 50, 50', 51 and 51'. The contaminated water flowing through the first and second jet pipes 50, 50', 51 and 51' in the length direction flows into the tank 30.

Further, the pair of the first jet pipes 50 and 50' are positioned to be at the lower inside the tank 30, the pair of the second jet pipes 51 and 51' are positioned to be above the first jet pipes 50 and 50' in the tank 30, and the orientation of the spray nozzles 53 protruding from the first jet pipes 50 and 50' is differently formed that of the spray nozzles 53 protruding from the second jet pipes 51 and 51'. As a result, upon jetting the contaminated water through the first and second jet pipes 50, 50', 51 and 51', a vortex is formed inside the tank so that the contaminated water and the composite precipitator are agitated.

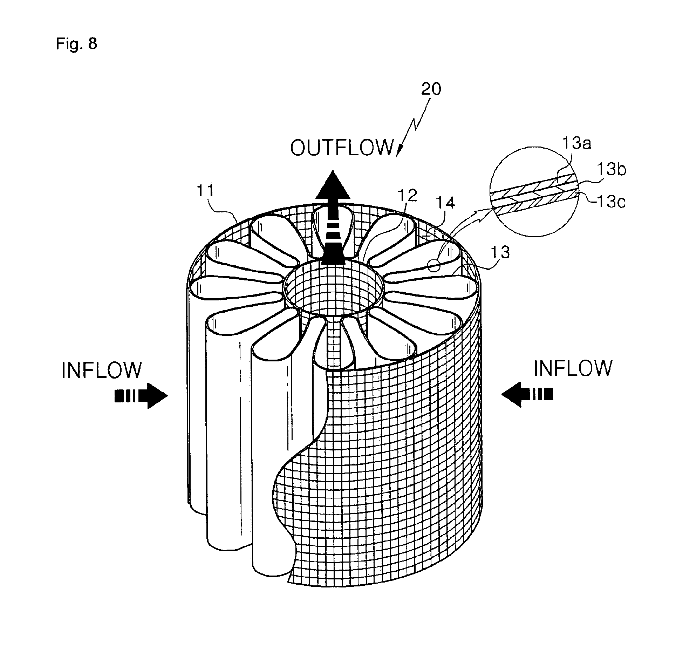

Fig. 8 is a perspective view of a structure of the second filter in the portable apparatus for purifying waste water according to the embodiment of the present invention. As illustrated, the second filter 20 has a dual pipe shape. The first and second filter housings 11 and 12 have one end being opened and have a cylindrical shape with an inner hollow part and the second filter housing 12 is inserted in the first filter housing 11 to have the dual pipe shape. Further, a PCP filter 13 is interposed in a space 14 between the first and second filter housings 11 and 12. The PCP filter 12 has a structure in that a first pre filter 13a, an activated carbon fiber 13b and a second pre filter 13c are sequentially bonded to form one body.

The PCP filter 13 repeatedly contacts to the inter surface of the first filter housing 11 and the outer surface of the second filter housing 12 alternately in each gentle curve and in a length direction of the PCP filter 13.

As for a filtering method, after the contaminated water flows in from the outside of the first filter housing 11 and moves to the inside of the second filter housing 12 through the PCP filter 13, the contaminated water from which the foreign materials are filtered flows out through the open one side of the second filter housing 12.

Further, reference numbers V10, V17, V4, V4', V15 and V15' which are shown in the drawings but not described indicate valves. The valve V10 has a role of an outlet for eliminating the precipitate inside the tank 30. The valve V17 is to extract the drinking water after filtering the contaminated water by the portable apparatus for purifying waste water according to the embodiment of the present invention. The valves V4 and V4' are to eliminate the foreign materials of the first filter 10. The valves V15 and V15' are to eliminate the foreign materials of the second filter 20.

As described above, the portable apparatus for purifying waste water according to the present invention extracts the purified drinking water by filtering the contaminated water through the first filter using a pre filter and the second filter using a PCP filter. The portable apparatus for purifying waste water is configured to allow the contaminated water flowing out from the first filter to flow into the tank, to sterilize the contaminated water in the tank, to cohere impurities contained in the contaminated water by putting the composite precipitator including a plurality of elements into the tank and to generate a precipitate, and then to extract the drinking water through the second filter. In accordance with the portable apparatus for purifying waste water, since the single same pump is used to solve the inflow of the contaminated water, the extraction of the drinking water by filtering the contaminated water, and the circulation and agitation of the contaminated water and the composite precipitator, the conventional process of using a number of tanks is simplified, the effects of filtering/sterilization/agitation to purify the contaminated water for the drinking water are improved, the manufacturing costs are reduced according to the simplification of the constituents and the removal of the unnecessary process, and it is easily moved.

While the present invention has been particularly shown and described with reference to exemplary embodiments thereof, it will be understood by those of ordinary skill in the art that various modifications and alternative arrangements in form and details may be made therein without departing from the spirit and scope of the present invention as defined by the following claims. The scope of the claims, therefore, should be accorded the broadest interpretation so as to encompass all such modifications and similar arrangements.

## Claims

1. A portable apparatus for purifying waste water, comprising:
a number of first filters (10) for primarily filtering foreign materials contained in contaminated water flowing in by a pump (52);
a tank (30) connected to the first filters (10), for sterilizing the contaminated water by a chlorine disinfectant being put inside the tank and for generating a cohered precipitate by putting a composite precipitator to be mixed with the contaminated water and by agitating the composite precipitator and the contaminated water; and
a number of second filters (20) connected to the tank (30), for secondarily filtering the contaminated water circulated and agitated by the pump 52 so that purified drinking water is extracted.

2. The portable apparatus of claim 1, wherein the tank (30) is connected to the pump (52), to have a repeated circulation structure in that the contaminated water mixed with the composite precipitator flows into the tank (30) after flowing out from the tank (30), and, during the circulation, the composite precipitator is input for a predetermined time so that the contaminated water and the composite precipitator are circulated and agitated.

3. The apparatus of claim 2, wherein, after the pump (52) is operated for a predetermined time, the tank (30) is on standby until impurities are precipitated by turning off the pump (52) for 30 minutes.

4. The portable apparatus of claim 1, wherein the composite precipitator uses a carbon cohesive agent and aluminum sulfate dissolved in distilled water, or a coagulant combining the carbon cohesive agent and aluminum sulfate.

5. The portable apparatus of claim 1 or claim 4, wherein, to purify the water of 10ℓ, the chlorine disinfectant of 100mg is used and the composite precipitator uses the carbon cohesive agent of 4g and the aluminum sulfate of 1.3g dissolved in the distilled water, or the chlorine disinfectant of 100mg is used and the composite precipitator uses the coagulant of 5.3g combining the carbon cohesive agent and aluminum sulfate.

6. The portable apparatus of claim 1, wherein the tank (30) is operatively connected to the first filters (10) by a flow pipe (65), the flow pipe 65 is connected to a distributor (40) divided into a number of first jet pipes (50, 50') and second jet pipes (51, 51') in the tank (30), and the first jet pipes (50, 50') and the second jet pipes (51, 51') respectively have a number of spray nozzles 53 to protrude from their outer surfaces, to be spaced apart from one other by a predetermined distance in a length direction, and to have different orientation to spray the contaminated water, so that a vortex occurs in the tank (30), to agitate the composite precipitator and the contaminated water.

7. The portable apparatus of claim 1, wherein the single pump (52) is connected to all of the tank (30), the first filters (10) and the second filters (20), so that, upon the inflow of the contaminated water, the pump (52) is used to suck in and flow the contaminated water into the tank (30) through the first filters (10); upon the mixing of the contaminated water and the composite precipitator, the pump (52) is used to repeatedly circulate the contaminated water, which flows out from the tank (30), to the tank (30) inside which the composite precipitator and the contaminated water are agitated; and upon the extraction of the drinking water, the pump (52) is used to flow the contaminated water circulated and agitated in the tank (30) into the second filters (20) so that the drinking water is extracted through the second filters(20), thereby enabling the inflow and agitation of the contaminated water and the extraction of the drinking water by the single pump (52).

8. The portable apparatus of claim 1, wherein the first filter (10) uses a pre filter which is a chemically treated general textile fabric.

9. The portable apparatus of claim 1, wherein the second filter (20) comprises a first filter housing (11) and a second filter housing (12) in a dual pipe shape, and a PCP filter (13) interposed in a space (14) formed between the first and second filter housings (11, 12), wherein the PCP filter (13) has a structure of sequentially bonding a first pre filter (13a), an activated carbon fiber (13b) and a second pre filter (13c), and wherein, after the contaminated water flowing from an outer surface of the first filter housing (11) sequentially passes through the PCP filter (13) and the second filter housing (12), it flows out to one inner side of the second filter housing (12).
